Europäisches Patentamt

(19) European Patent Office

Office européen des brevets

(11) Publication number: **0 055 078**
**B1**

## (12) EUROPEAN PATENT SPECIFICATION

(45) Date of publication of patent specification: **17.09.86**

(51) Int. Cl.⁴: **G 09 B 9/08**

(21) Application number: **81305919.3**

(22) Date of filing: **17.12.81**

(54) Blended mode concept for control of flight simulator motion systems.

(30) Priority: **18.12.80 US 217701**

(43) Date of publication of application:
**30.06.82 Bulletin 82/26**

(45) Publication of the grant of the patent:
**17.09.86 Bulletin 86/38**

(84) Designated Contracting States:
**DE FR GB NL**

(56) References cited:
**US-A-2 930 144**
**US-A-3 295 224**
**US-A-3 304 628**
**US-A-3 463 866**
**US-A-4 089 494**

(73) Proprietor: **CAE Electronics Ltd.**
**8585 Cote de Liesse**
**Montreal Quebec H4T 1G6 (CA)**

(72) Inventor: **Lam, Wim J.**
**Engelandlaan 582**
**NL-2034 HA Haarlem (NL)**
Inventor: **de Vries, Luitzen**
**Top Naefflaan 19**
**Amstelveen (NL)**
Inventor: **McKinnon, Gordon Murdoch**
**3811 Harvard Avenue**
**Montreal Quebec, H4A 2WA (CA)**
Inventor: **Baribeau, Jean Joseph**
**3030 Savard**
**St. Laurent Quebec (CA)**

(74) Representative: **Gillam, Francis Cyril et al**
**Sanderson & Co. 97 High Street**
**Colchester Essex C01 1TH (GB)**

Courier Press, Leamington Spa, England.

## Description

The invention relates to a circuit for use in a motion simulator system, and to such a simulation system using such a circuit. More specifically, the invention relates to a circuit for controlling a system which is driven by command signals representing both position and acceleration, which circuit combines and processes the acceleration and position command signals so as to provide a signal for driving the means for imparting motion in a simulator system.

In motion simulator systems, and especially in flight simulator motion systems, the sensation of motion is given to users by simulating the forces which normally act in the simulating system, so as to give the user the feeling of motion. Thus, the simulator system must take into account the type of motion which should be experienced by the user. That is, there will be different forces acting on the user when an aircraft is supposed to be banking than when the aircraft is supposed to be yawing.

Exemplary of the teachings in the art in this regard are U.S. Patents Nos. 2,687,580, issued August 31, 1954; 2,930,144, issued March 29, 1960; 3,304,628, issued February 21, 1967; 3,538,624, issued November 10, 1970; 3,890,722, issued June 24, 1975; and 4,089,494 issued May 16, 1978.

U.S. Patent No. 2,687,580 teaches a system for simulating forces acting on the user which forces are due to gravity and centrifugal forces when an aircraft is yawing and pitching. This is a relatively early proposal as it relates to development work done prior to May 25, 1948.

U.S. Patents Nos. 2,930,144 and 3,304,628 relate to systems for simulating the pressures and forces due to acceleration. U.S. Patent No. 3,538,624 discloses the user of filtered white noise signals, superimposed on signals of normal aircraft motion, to produce simulation of turbulence. U.S. Patent No, 3,890,722 teaches a system for simulating motion in different environments that is, either of airborne aircraft or of vehicles moving under water.

In the control of flight simulator motion systems, or other devices used to provide the sensation of motion, acceleration is the variable of prime interest since it is acceleration which is perceived as motion by human sensory systems. In must conventional systems, position is used as the principal control variable. Recently, position and acceleration controls have been mixed in such a way as to control acceleration in the high frequency range in which fidelity of motion is most important, position control being maintained at lower frequencies to keep the motion system centered within its range of permitted motion.

U.S. Patent No. 4,089,494 describes a motion simulator system employing a circuit arrangement which permits the generation of both the position and force (acceleration) control signals, the position control loop being low pass and the force control loop being high pass. Despite this, the frequency ranges of the position control signals and force control signals overlap to some extent, and this can lead to improper operation of the overall simulator system, including the gradual drift of the platform away from its intended position.

It is a principal aim of this invention to provide a control circuit for such a motion simulator which does not suffer from this problem.

Accordingly, this invention provides a circuit for use in a motion simulator system which has a platform unit, means for imparting motion to the platform unit, and means for driving said means for imparting motion, which circuit provides a command signal to said means for driving on the basis of an acceleration command signal and a position command signal both of which signals are time variable with an overlap between the acceleration command signal frequency range and the position command signal frequency range, the circuit having means for receiving the acceleration command signal, means for receiving the position command signal, means for eliminating slowly varying acceleration command signals, means for eliminating quickly varying position command signals, means for processing and combining the uneliminating acceleration command signals and position command signals to provide the command signal for driving said means for imparting motion, which circuit is characterised by the provision of compensation means to remove distortions over the range of the overlap of the acceleration command signal frequency range and the position command signal frequency range.

Most preferably, there are provided in the circuit a first summing junction, a second summing junction, integrator means, velocity limiter means, and velocity feedback means, the acceleration command signal being fed to the first summing junction and the compensation means, the output of the compensation means and the position command signal being fed to the second summing junction, the output of the second summing junction being fed to the first summing junction, the output of the first junction being fed to the integrator means, the output of the integrator means being fed to the velocity limiter means and the velocity feed means, the output of the velocity limiter means being fed to the first summing junction, and the output of the velocity feedback means being fed to the second summing junction.

In a case where the means for imparting motion comprises a piston and cylinder arrangement having a force transducer at the free end of the piston and a velocity and position transducer at the bottom end of the cylinder, and said means for driving comprises a servo-valve, the circuit may further comprise velocity compensator means, linearity compensator means and a load compensator means for compensating for non-linearities and dynamics, a servo compensator means, a third summing junction, and a fourth summing junction, the output of the first summing junction being fed to the third summing junction and to the linearity compensator means, the output of the force transducer being fed to the linearity compensator means and to the first load compensator means, the output of the velocity and position transducer being fed to the velocity compensator means, the output of the velocity compensator means being fed to the fourth summing junction, the output of the fourth summing junction being fed to the third summing junction, the output of the third summing junction being fed to the servo compensator means, and the output of the servo compensator means being fed to the servo-valve, whereby the output of the servo compensator means comprises the command signal to said means for driving.

The general purpose behind this invention is to provide a circuit able to improve the performance of a motion simulator system. Such a system may therefore comprise in combination a platform unit, means for imparting motion to the platform unit, means for driving said means for imparting motion, and a circuit as defined above.

The motion means advantageously comprises one or more hydraulically-operated extensible members, and a computing device is used to generate electrical signals representative of the desired position and acceleration of the extensible portion relative to the fixed portion of the extensible member. The circuit operates so that the position signal is operative at low frequencies and the acceleration signal is operative at high frequencies, and these are combined with electrical signals representing combinations of pressure in the hydraulic extensible member, current position of the extensible portion, current velocity of the extensible portion and force applied by the extensible member. The resulting signal can then be used to control an electro-hydraulic servo-valve to regulate flow to the extensible member. The use of a combination of position and acceleration signals is of particular importance when applied to systems used to provide realistic simulated motion to an occupied cab such as the crew compartment of a flight simulator. In this case, the occupants are sensitive primarily to acceleration and changes in acceleration so that the improved fidelity attained by including high frequency control of acceleration enhances motion realism.

To be effective, the or each extensible member used must have low friction and the electrical devices used to control the extensible member must be capable of operating in the frequency ranges where acceleration is to be controlled. In a flight simulator, a typical extensible member is a hydraulic cylinder fitted with hydrostatic bearings to support the extensible portion in the fixed portion so as to reduce friction forces, and a force transducer would be included to measure the force imparted to the crew compartment by each extensible member. The force signal is one input to the electric circuit means used to control movement of the extensible member and acts in such a way as to reduce unwanted accelerations and to compensate for the changes in force applied to each member due to changes in attitude of the crew compartment.

In a preferred embodiment of this invention, the platform unit is supported by a plurality of motion means each in the form of an hydraulic piston-and-cylinder arrangement disposed below the platform unit at spaced points thereon, for imparting motion to the platform unit. Conveniently, there is a position and velocity transducer disposed at the bottom end of the cylinder of the piston-and-cylinder arrangement, and a force transducer disposed at the top end of the piston-and-cylinder arrangement, which transducer generates signals fed back to the circuit means.

By way of example only, one specific embodiment of this invention will now be described in detail, reference being made to the accompanying drawings, in which:

Figure 1 illustrates a typical motion simulator system; and

Figure 2 illustrates an embodiment of a motion drive circuit in accordance with the invention.

Some prior art motion simulators utilize a number of hydraulically actuated, extensible members, connected between a fixed base and the platform to be moved in a controlled way. The hydraulic actuators are controlled by means of computing devices which generate electrical signals representative of the desired position of the extensible member. The resulting electrical signal is fed into the electrical devices, in some cases modified by the addition of electrical signals representing combinations of pressure in the hydraulic member, current position of extensible portion, current velocity of the extensible portion or force applied by the extensible member.

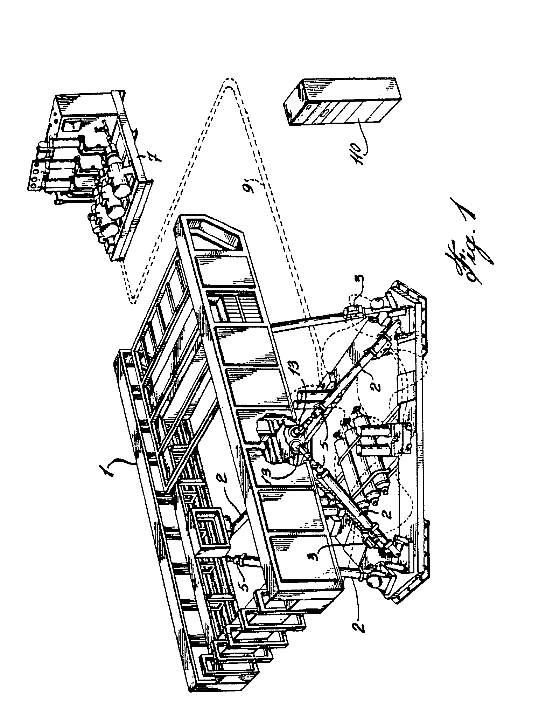

Figure 1 illustrates a typical member of a motion system of the above-described type. In Figure 1 there is shown a platform 1 which carries the cabin in which the user is disposed during use of the system. The platform is supported on extensible members 2 which usually are hydraulically actuated. Figure 1 illustrates a system in which six such extensible members support the platform. This is a typical configuration, but some motion systems may have more or less extensible members.

Each extensible member is controlled by an associated servo-valve 3 and includes an extensible portion 5 which is at the end of the extensible member closest to the platform.

Hydraulic fluid for driving the extensible members is provided from the hydraulic power supply 7 through flexible hoses 9.

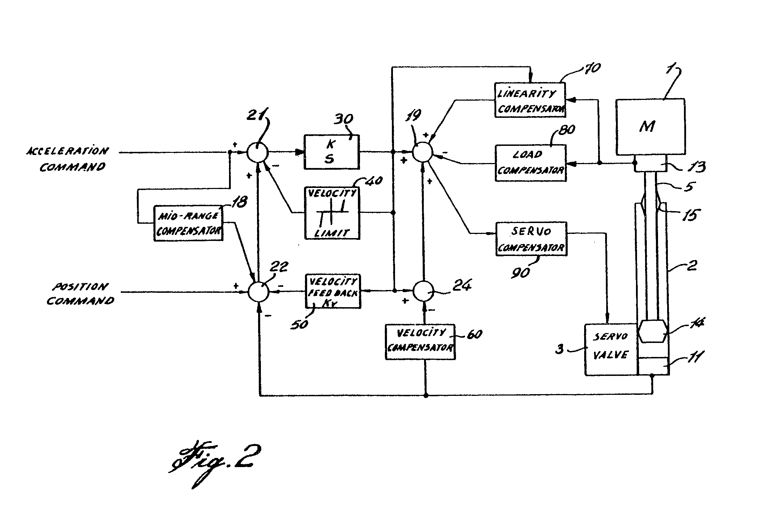

The electrical signals used to control the motion of the extensible members come from a control cabinet 110 which contains electronic circuits which respond to command inputs from a computer (not shown), and combine the command signal with electrical signals reflecting position, force and velocity. The force signal employed in the system shown in Figure 2 hereof is derived from a force transducer 13 located at the connection point of each extensible member and the platform.

The motion system illustrated in Figure 1 is capable of motion in six degrees of freedom. However as will be appreciated, the invention described below applies equally well to motion systems contrained to fewer degrees of freedom, and is independent of the geometry or location of the extensible members.

In accordance with the present invention, a drive circuit for controlling the motion of the extensible members receives as inputs both acceleration command signals and position command signals. An embodiment of such a circuit is illustrated in Figure 2.

Referring now to Figure 2, the acceleration command signal is applied to summing junction 21 while the position command signal is applied to summing junction 22. As will be seen below, the acceleration and position command signals are then combined to provide a control signal.

Both the command signals are time-varying signals and a change in the level of either signal represents, respectively, a change in acceleration and a change in position. As humans are not too sensitive to slow changes in acceleration, these slow changes in acceleration are eliminated by the drive circuit. The use of quickly changing acceleration signals improves fidelity and enhances motion realism. Quickly changing position command signals are eliminated by their drive circuits.

The use of a position command signal, applied through summing junction 22, is to keep the motion system centered within its motion envelope by eliminating command signals for large changes in position.

As will be appreciated, there is a frequency overlap between acceleration and position commands, and in the overlapping frequencies, the signals will cancel each other. A mid-range frequency compensator 18 is provided for the purpose of compensating for this overlap in frequency and for removing this defect.

It is also necessary to modify the control signal with signals reqpresentative of the position, velocity, force and mass distribution of the extensible member. For this purpose, the circuit includes blocks 30, 40, 50, 60, 70 and 80. As will be appreciated, many variations of this circuit can be visualized and designed. The circuit in Figure 2 represents only a particular operating embodiment.

Considering the blocks in the figure, block 30 represents an electronic integrator used to convert the acceleration command to a velocity signal. Block 40 is a limit circuit and imposes limits on the maximum velocities which can be commanded. Block 50 is a velocity feedback circuit, and block 60 is a velocity compensator circuit whose function will be explained below.

The extensible portion 5 of extensible member 2 is supported in a cylinder by low friction bearings 15 and includes transducers 11 and 13 at the bottom and top ends thereof respectively. The transducer 13 is a force transducer and provides an electrical signal related to force, and the transducer 11 provides electrical signals reflecting position and velocity of the extensible portion 5 of the piston and cylinder arrangement which comprises the extensible member 2.

In operation, the circuit operates as follows. An acceleration command signal is applied to summing junction 21. At the same time, the acceleration command signal is applied to a mid-range compensator 18 whose output is, in turn, supplied to the summing junction 22.

A position command signal is applied to the summing junction 22, and the output of the summing junction 22 is also applied to summing junction 21.

The output of summing junction 21 is fed to the integrating circuit 30 to provide a velocity signal, and the output of the integrating circuit is fed to the velocity limiting circuit 40 which is returned to the summing junction 21.

The output of the integrator is also fed to summing junction 19 where it is modified by electrical signals which compensate for the dynamics and non-linearities in the mechanical components. These signals are derived from circuits 70, 80 and summing junction 24. 70 compensates for the non-linearity characteristics of the mechanical components, and 80 compensates for the load characteristics thereof.

The output of 19 is then fed, through 90, to the servo-valve 3 which controls the flow of hydraulic fluid into or out of the extensible member 2 which, in the present embodiment, comprises a hydraulic cylinder, such as to cause the extensible member, in this case the piston 14 and extensible portion (rod) 5, to extend or retract as required.

The position of the piston 14 is sensed by the transducer 11 which provides an electrical signal to summing junction 22 and, in addition, provides a compensation signal through block 60 to the summing junction 24 and, subsequently, to the summing junction 19. Summing junction 24 also receives an input from the integrator 30.

Motions of the piston resulting from signals to the servo-valve result in force variations applied to the simulated crew compartment represented by block 1 as a fixed mass. The force transducer 13 detects these changes and provides a signal to compensate for them.

The illustrated circuit constitutes but a single embodiment for implementing the invention. The basic point of the invention is that acceleration command and position command signals are combined and suitably processed and modified to provide a drive signal to motion imparting means for providing simulated motion to a platform which carries a simulated crew compartment. In accordance with the invention, following the elimination of the low frequency components of the acceleration signal and the high frequency components of the position command signal, these signals are combined and modified by providing compensation to remove distortions in the range of frequency overlap of the acceleration and position signals.

As will be appreciated, a separate such circuit is provided for each of the extensible members, and each of the extensible members is driven by its respective servo-valve which is, in turn, controlled by the circuit.

## Claims

1. A circuit for use in a motion simulator system which has a platform unit (1), means (2) for imparting motion to the platform unit, and means for driving said means for imparting motion, which circuit (Figure 2) provides a command signal to said means for driving on the basis of an acceleration command signal and a position command signal both of which signals are time variable with an overlap between the acceleration command signal frequency range and the position command signal frequency range, the circuit having means (21) for receiving the acceleration command signal, means (22) for receiving the position command signal, means (40) for eliminating slowly varying acceleration command signals, means (50) for eliminating quickly varying position command signals, means (19) for processing and combining the uneliminated acceleration command signals and position command signals to provide the command signal for driving said means (2) for imparting motion, characterised in that there are provided compensation means (18) to remove distortions over the range of the overlap of the acceleration command signal frequency range and the position command signal frequency range.

2. A circuit as defined in claim 1, and further characterised by the provision of a first summing junction, a second summing junction, integrator means, velocity limiter means, and velocity feedback means, the acceleration command signal being fed to the first summing junction and the compensation means, the output of the compensation means and the position command signal being fed to the second summing junction, the output of the second summing junction being fed to the first summing junction, the output of the first junction being fed to the integrator means, the output of the integrator means being fed to the velocity limiter means and the velocity feed means, the output of the velocity limiter means being fed to the first summing junction, and the output of the velocity feedback means being fed to the second summing junction.

3. A circuit as defined in claim 2, and wherein said means for imparting motion comprises a piston and cylinder arrangement having a force transducer at the free end of the piston and a velocity and position transducer at the bottom end of the cylinder, and said means for driving comprises a servo-valve, characterised in that the circuit further comprises velocity compensator means, linearity compensator means and a load compensator means for compensating for non-linearities and dynamics, a servo compensator means, a third summing junction, and a fourth summing junction, the output of the first summing junction being fed to the third summing junction and to the linearity compensator means, the output of the force transducer being fed to the linearity compensator means and to the first load compensator means, the output of the velocity and position transducer being fed to the velocity compensator means, the output of the velocity compensator means being fed to the fourth summing junction, the output of the fourth summing junction being fed to the third summing junction, the output of the third summing junction being fed to the servo compensator means, and the output of the servo compensator means being fed to the servo-valve, whereby the output of the servo compensator means comprises the command signal to said means for driving.

4. A motion simulator system comprising in combination a platform unit (1), means (2) for imparting motion to the platform unit, means for driving said means for imparting motion, and circuit means as defined in any of claims 1 to 3.

5. A system as defined in claim 4, characterised in that the means for imparting motion comprises a piston and cylinder arrangement (2), the piston (14) of the arrangement being connected to the platform (1), and the means for driving the means for imparting motion comprising a servo-valve (3).

6. A system as defined in claim 5, further characterised in that there is a plurality of piston and cylinder arrangements, all of which are hydraulically driven.

7. A system as defined in claim 4, characterised in that the means for imparting motion to the platform comprises a plurality of extensible members disposed below and supporting the platform unit, each extensible member including servo means for imparting motion to an extensible portion of the extensible member.

8. A system as defined in claim 7, further characterised in that each extensible member comprises a piston and cylinder arrangement (2), and the servo means comprises a servo-valve, there being a position and velocity transducer (11) disposed at the bottom end of the cylinder of the piston and cylinder arrangement (2) and a force transducer (13) disposed at the top end of the piston and cylinder arrangement (2).

## Revendications

1. Un circuit à employer dans un système simulateur de mouvement ayant un élément plate-forme (1), un moyen (2) de mouvoir l'élément plate-forme, et un moyen d'entraîner ledit moyen pour donner du mouvement, lequel circuit (Figure 2) fournit un signal de commande audit moyen d'entraînement basé sur un signal de commande d'accélération et un signal de commande de position, les deux signaux variant selon le temps avec un chevauchement entre la gamme de fréquence du signal de commande d'accélération et la gamme de fréquence du signal de commande de position, le circuit ayant un moyen (21) pour recevoir le signal de commande d'accélération, un moyen (22) pour recevoir le signal de commande de position, un moyen (40) pour éliminer les signaux de commande d'accélération variant lentement, et un moyen (50) pour éliminer les signaux de commande de position variant rapidement, un moyen (19) pour élaborer et combiner les signaux de commande d'accélération et de position qui n'ont pas été éliminé afin de fournir le signal de commande pour entraîner ledit moyen (2) pour donner du mouvement, caractérisé en ce qu'on pourvoit un moyen de compensation (18) pour enlever les distorsions dans l'étendue du chevauchement entre la gamme de fréquence du signal de commande d'accélération, et la gamme de fréquence du signal de commande de position.

2. Un circuit comme celui défini à la revendication 1, caractérisé de plus par la fourniture d'un premier point de sommation, d'un deuxième point de sommation, d'un moyen d'intégration, d'un moyen de limiter la vitesse, et d'un moyen de réaction de vitesse, le signal de commande d'accélération étant fourni au premier point de sommation et aussi au moyen de compensation, la sortie du moyen de compensation et le signal de commande de position étant fournis au deuxième point de sommation, la sortie du deuxième point de sommation étant fournie au premier point de sommation, la sortie du premier point étant fournie au moyen d'intégration, la sortie du moyen d'intégration étant fournie au moyen de limitation de vitesse et le moyen de réaction de vitesse, la sortie du moyen de limitation de vitesse étant fournie au premier point de sommation, et la sortie du moyen de réaction de vitesse étant fournie au deuxième point de sommation.

3. Un circuit comme celui défini à la revendication 2, et dans lequel ledit moyen de donner du mouvement comporte un ensemble de piston et cylindre ayant un transducteur de force a l'éxtrémité libre du piston et un transducteur de vitesse et de position au fond du cylindre, et ledit moyen d'entraînement comporte une servo-soupape, caractérisé en ce que le circuit comporte aussi un moyen de compensation de vitesse, un moyen de compensation de linéarité, et un moyen de compensation de charge pour compenser les effets non-linéaires et la dynamique, un moyen de compensation servo, un troisième point de sommation et un quatrième point de sommation, la sortie du premier point de sommation étant fournie au troisième point de sommation et au moyen de compensation de linéarite, la sortie du transducteur de force étant fournie au moyen de compensation de linéarite et au premier moyen de compensation de charge, la sortie du transducteur de vitesse et de position étant fournie au moyen de compensation de vitesse, la sortie du moyen de compensation de vitesse étant fournie au quatrième point de sommation, la sortie du quatrième point de sommation étant fournie au troisième point de sommation, et la sortie du troi-

sième point de sommation étant fournie au moyen de compensation servo, et la sortie du moyen de compensation servo étant fournie à la servo-soupape, de telle sorte que la sortie du moyen de compensation servo constitue le signal de commande audit moyen d'entraînement.

4. Un système simulateur de mouvement comportant en association les uns avec les autres un élément plate-forme (1), un moyen (2) de donner du mouvement à l'élément plate-forme, un moyen pour l'entraînement dudit moyen de donner du mouvement, et des moyens de circuit définis dans n'importe laquelle des revendications 1 a 3.

5. Un système comme celui défini à la revendication 4, caractérisé en ce que le moyen de donner du mouvement comporte un ensemble de piston et cylindre (2), le piston (14) de l'ensemble étant relié à la plate-forme (1), et le moyen pour entraîner le moyen de donner du mouvement étant constitué d'une servo-soupape (3).

6. Un système comme celui défini à la revendication 5, caractérisé de plus en ce qu'il y a une pluralité d'ensembles de piston et cylindre, tous entraînés hydrauliquement.

7. Un système comme celui défini à la revendication 4, caractérisé en ce que le moyen pour donner du mouvement à la plate-forme est constitué d'une pluralité de membres extensibles disposés au dessous de l'élément plate-forme et le soutenant, chaque membre extensible comportant un moyen servo pour donner du mouvement à une partie extensible du membre extensible.

8. Un système comme celui défini à la revendication 7, caractérisé de plus en ce que chaque membre extensible comporte un ensemble de piston et cylindre (2), et que le moyen servo comporte une servo-soupape, un transducteur de position et de vitesse (11) étant disposé au fond du cylindre de l'ensemble de piston et cylindre (2) et un transducteur de force (13) étant disposé à l'éxtrémité supérieure de l'ensemble de piston et cylindre (2).

**Patentansprüche**

1. Schaltung für ein Bewegungssimulationssystem, das einen Plattformteil (1), Bewegungsübertragungseinrichtungen (2) für den Plattformteil und Antriebseinrichtungen für die Bewegungsübertragungseinrichtungen aufweist, wobei die Schaltung (Figur 2) ein auf ein Beschleunigungssollsignal basierendes Antriebssollsignal und ein Positionssignal erzeugt, die beide zeitveränderlich sind und sich im Frequenz-bereich überlappen, und ferner aufweist Beschleunigungssollsignal - Empfangseinrichtungen (21), Positionssollsignal-Empfangsseinrichtungen (22), Eliminationseinrichtungen (40) für sich langsam verändernde Positionssollsignale, Eliminationseinrichtungen (50) für sich schnell verändernde Positionssollsignale, Verarbeitungs- und Kombinationseinrichtungen für die nicht eliminierten Beschleunigungs- und Positionssollsignale zur Erzeugung des Antriebssollsignals für die Bewegungsübertragungseinrichtungen (2), dadurch gekennzeichnet, daß Kompensationseinrichtungen (18) zur Entfernung von Verzerrungen über den Frequenzüberlappungsbereich des Beschleunigungs- und Positionssollsignals vorgesehen sind.

2. Schaltung nach Anspruch 1, ferner gekennzeichnet durch Vorsehen einer ersten und zweiten Summierverbindung, von Integrationseinrichtungen, von Geschwindigkeitsbegrenzungs- und Geschwindigkeitsrückkopplungseinrichtungen, wobei das Beschleunigungssollsignal der ersten Summierverbindung und den Kompensationseinrichtungen, der Ausgang der Kompensationseinrichtungen und das Positionssollsignal der zweiten Summierverbindung, der Ausgang der zweiten Summierverbindung der ersten Summierverbindung, der Ausgang der ersten Summierverbindung den Integrationseinrichtungen, der Ausgang der Integrationseinrichtungen den Geschwindigkeitsbegrenzungs- und den Geschwindigkeitsrückführungseinrichtungen, der Ausgang der Geschwindigkeitsbegrenzungseinrichtungen der ersten Summierverbindung und der Ausgang der Geschwindigkeitsrückführungseinrichtungen der zweiten Summierverbindung zugeführt wird.

3. Schaltung nach Anspruch 2, wobei die Bewegungsübertragungseinrichtungen eine Kolben- und Zylinderanordnung mit einem Kraftmeßwandler am freien Ende des Kolbens und einem Geschwindigkeits- und Positionsmeßwandler am bodenseitigen Ende des Zylinders umfassen, und die Antriebseinrichtungen ein Servoventil umfassen, dadurch gekennzeichnet, daß die Schaltung ferner Geschwindigkeitskompensationseinrichtungen, Linearitäts- und Lastkompensationseinrichtungen für Nicht-Linearitäten und Dynamik, Servokompensationseinrichtungen, eine dritte Summmierverbindung und eine vierte Summierverbindung umfaßt, wobei der Ausgang der ersten Summierverbindung der dritten Summierverbindung und den Linearitätskompensationseinrichtungen, der Ausgang des Kraftmeßwandlers den Linearitätskompensationseinrichtungen und den ersten Lastkompensationseinrichtungen, der Ausgang des Geschwindigkeits- und Positionsmeßwandlers den Geschwindigkeitskompensationseinrichtungen, der Ausgang der Geschwindigkeitskompensationseinrichtungen der vierten Summierverbindung, der Ausgang der vierten Summierverbindung der dritten Summierverbindung, der Ausgang der dritten Summierverbindung den Servokompensationseinrichtungen, und der Ausgang der Servokompensationseinrichtungen dem Servoventil zugeführt werden, wobei der Ausgang der Servokompensationseinrichtungen das Sollsignal für die Antriebseinrichtungen umfaßt.

4. Bewegungssimulationssystem, gekennzeichnet durch die Kombination eines Plattformteils (1), Bewegungsübertragungseinrichtungen (2) für den Plattformteil, Antriebseinrichtungen für den Bewegungsübertragungsteil und eine Schaltung nach einem der Ansprüche 1 bis 3.

5. System nach Anspruch 4, dadurch gekennzeichnet, daß die Bewegungsübertragungseinrichtungen eine Kolben- und Zylinderanordnung (2) umfassen, wobei der Kolben (14) der Anordnung mit dem Plattformteil (1) verbunden ist, und die Antriebseinrichtungen für die Bewegungsübertragungseinrichtungen ein Servoventil (3) umfassen.

6. System nach Anspruch 5, gekennzeichnet durch eine Vielzahl von Kolben- und Zylinderanordnungen, die alle hydraulisch angetrieben werden.

7. System nach Anspruch 4, dadurch gekennzeichnet, daß die Bewegungsübertragungseinrichtungen für den Plattformteil eine Vielzahl ausfahrbarer Teile umfassen, die unterhalb des Plattformteils angeordnet sind und diesen abstützen und jeweils auf ihrem ausfahrbaren Abschnitt Servoeinrichtungen zur Bewegungsübertragung aufweisen.

8. System nach Anspruch 7, ferner dadurch gekennzeichnet, daß jedes ausfahrbare Teil eine Kolben- und Zylinderanordnung (2) umfaßt, und die Servoeinrichtungen ein Servoventil umfassen, wo ein Positions- und Geschwindigkeitsmeßwandler (11) am bodenseitigen Ende des Zylinders der Kolben- und Zylinderanordnung (2) und ein Kraftmeßwandler (13) am oberen Ende der Kolben- und Zylinderanordnung (2) angeordnet sind.

Fig. 1

Fig. 2